(19) Europäisches Patentamt / European Patent Office / Office européen des brevets

(11) **EP 2 253 407 B1**

(12) **EUROPEAN PATENT SPECIFICATION**

(45) Date of publication and mention
of the grant of the patent:
**20.07.2011 Bulletin 2011/29**

(51) Int Cl.:
***B23K 9/095*** *(2006.01)*

(21) Application number: **09425202.0**

(22) Date of filing: **22.05.2009**

(54) **System for monitoring arc welding processes and corresponding monitoring method**

System zur Überwachung von Lichtbogenschweißverfahren und entsprechendes
Überwachungsverfahren

Système pour la surveillance de procédés de soudure à l'arc et procédé de surveillance correspondant

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**24.11.2010 Bulletin 2010/47**

(73) Proprietor: **C.R.F. Società Consortile per Azioni**
**10043 Orbassano (Torino) (IT)**

(72) Inventors:
• **D'Angelo, Giuseppe**
**10043 Orbassano (Torino) (IT)**
• **Pasquettaz, Giorgio**
**10043 Orbassano (Torino) (IT)**

• **Terreno, Andrea**
**10043 Orbassano (Torino) (IT)**

(74) Representative: **Notaro, Giancarlo**
**Buzzi, Notaro & Antonielli d'Oulx**
**Via Maria Vittoria 18**
**10123 Torino (IT)**

(56) References cited:
**US-A1- 2006 163 229**

• SHINODA T ET AL: "AN EVALUATION OF SHORT
CIRCUITING ARC PHENOMENA IN GMA
WELDING" WELDING AND METAL
FABRICATION, IPC LTD. HAYWARDS HEATH,
GB, vol. 57, no. 10, 1 December 1989 (1989-12-01),
pages 522-525, XP000096709 ISSN: 0043-2245

**Description**

The present invention relates to a system for monitoring arc-welding processes, which comprises arc-voltage sensor means and arc-current sensor means, means for acquisition of voltage values measured by said arc-voltage sensor means and of current values measured by said arc-current sensor means, and processing means configured for processing said voltage values and said current values for calculating one or more vectors of time values corresponding to a state of arc of the arc-welding process.

MIG (Metal-arc Inert Gas) or MAG (Metal-arc Active Gas) welding techniques envisage welding with metal under gas protection, respectively, under inert gas and under active gas. Said techniques have been known for several decades and go under the name of GMAW (Gas Metal Arc Welding). Said welding techniques have spread widely on account of the possibility of developing semi-automatic welding machines at a relatively low cost. The MIG/MAG welding method is a continuous-wire method, in which the protection of the weld puddle is ensured by a cover gas, which flows from the torch onto the piece to be welded. The metal of the wire, by melting, is transferred to the weld puddle according to three modalities: by short circuit, in drops, by spraying. In the first case, also referred to as "short arc", the current that traverses the wire is not sufficiently high to bring it to the melting temperature; hence, the wire is in contact with the weld puddle, causing a short circuit between the two metals, which, by causing an increase in the current, melts the tip of the wire; i.e., the metal is not transferred through the arc. In the second case, the wire melts to form drops of a diameter greater than that of the electrode, which are transferred into the weld puddle basically by the force of gravity. In the case of spraying, the wire melts to form a large number of droplets, with currents higher than the ones required for transfer in drops.

Methods and systems are known for carrying out a monitoring during said arc-welding processes. Said processes in general envisage detection of the voltage and current from the arc-welding process and processing thereof. There are known, for instance, systems that monitor when the value of current exceeds a certain current threshold.

The U.S. patent No. US 6 031 203 describes a method that envisages taking into account the arc and welding times deriving from the observation of voltage and current, calculating the standard deviation thereof. The stability of the weld is evaluated on the basis of a product of the standard deviation then compared to a reference value. It is also envisaged to calculate, in addition the voltage and current, a ratio between arc time and welding time and the standard deviation of said ratio. Said method proves as a whole complex for the operator to use, does not provide a possible operator with an immediately understandable representation of the possible defectiveness, and makes use of predetermined reference values; see also "An evaluation of short circuiting are phenomena in GMA welding", by T Shinoba, H. Kaneda and Y. Takeuchi, welding and Metal Fabrication 57 (1989) December, n°10

The object of the present invention is to overcome all the aforesaid drawbacks.

With a view to achieving the above purpose, the subject of the invention is a system as defined in claim 1.

In the preferred embodiment, said filtering comprises application of a median filter of rank that varies according to the desired sensitivity to defects.

Of course, the subject of the invention is also the method for monitoring arc-welding processes implemented by the system described above.

Further characteristics and advantages of the invention will emerge from the ensuing description with reference to the annexed drawings, which are provided purely by way of non-limiting example and in which:

- Figure 1 is a schematic view of a system for monitoring arc-welding processes according to the invention;
- Figures 2a-2e illustrate steps of an example of arc-welding process monitored by the system according to the invention;
- Figure 3 shows a diagram of quantities acquired from the arc-welding process by the system according to the invention;

- Figures 4a-4c show an example of acceptable weld and the corresponding diagrams illustrating operation of the system according to the invention;
- Figures 5a-5c show an example of non-acceptable weld and corresponding diagrams illustrating operation of the system according to the invention; and
- Figures 6a-6c show diagrams for identification of the welding defects used by the system according to the invention.

In brief, the system proposed envisages:

calculating a distribution of arc-time vectors corresponding to a reference weld and calculating acceptability thresholds of arc time imposing a value of probability on said distribution;
acquiring an arc-time vector for a weld to be monitored and estimating said arc times by applying a filtering;
comparing said filtered arc-time vector with said acceptability thresholds;

signalling a weld defect at arc-time values not comprised within said acceptability thresholds.

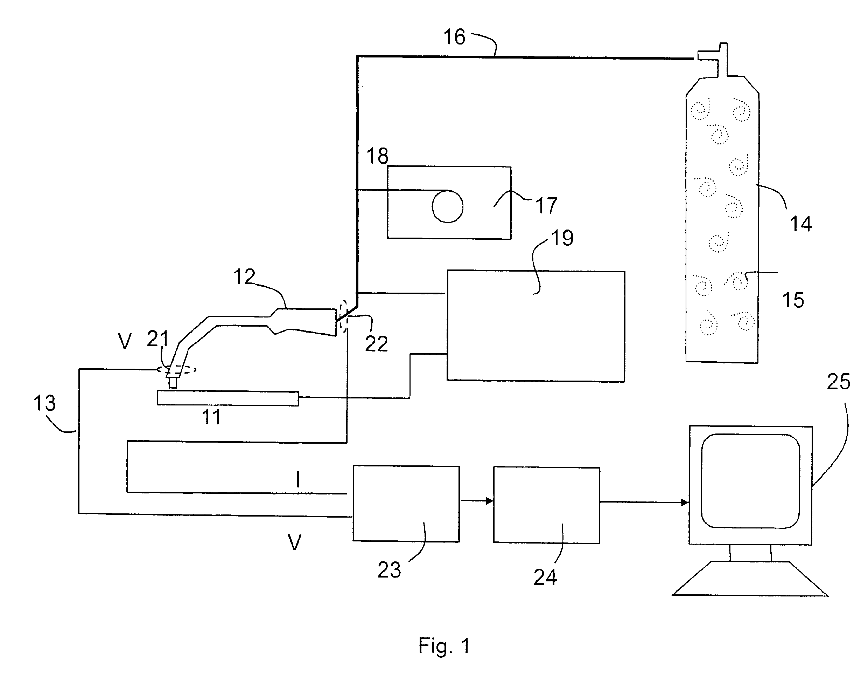

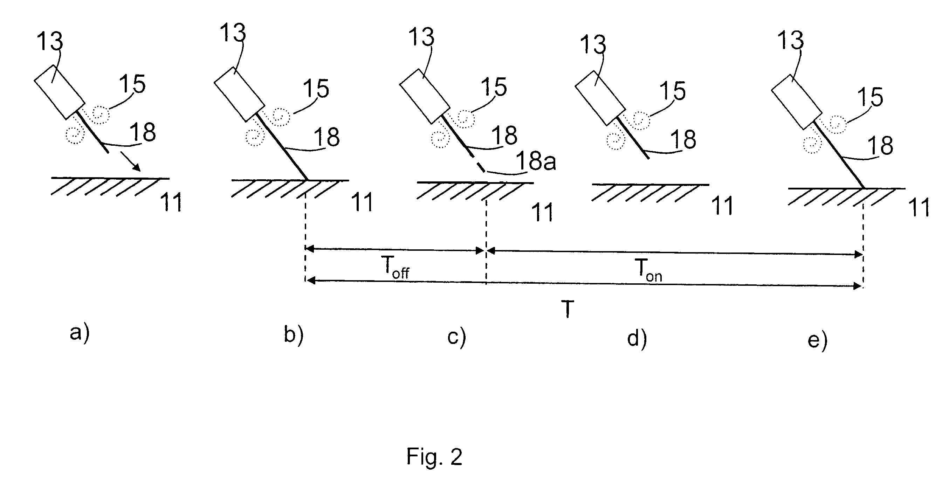

Represented in Figure 1 is a block diagram of the system for monitoring arc-welding processes according to the invention, in which designated by the reference number 11 is a piece to be welded, on which the weld puddle is localized. Designated by the reference number 12 is a welding torch, which comprises a nozzle 13. Designated by 14 is a cylinder containing protection gas, which supplies a protection gas 15 through a duct 16 to the welding torch 12. Designated by 17 is an apparatus for unwinding the wire, said wire being designated by 18 and entering from the unwinding apparatus 17 into the duct 16 to be supplied to the welding torch 12. Moreover provided is an arc-current generator 19 connected to the welding torch 12 and to the piece to be welded 11. From the nozzle 13, as may be seen from Figures 2a-2e, protection gas 15 flows and also the welding wire 18 exits, said wire being set in contact, via a sliding-pad contact (not represented in the figures), with the electrical supply provided by the arc-current generator 19. According to the invention, provided, for example upstream of the nozzle 13, is a voltage sensor 21 for detecting the arc voltage on the welding wire 18, whilst an arc-current sensor 22, for example an amperometric clamp meter, for measuring the current on said welding wire 18 is provided on board the arc-current generator 19. The arc-voltage sensor 21 and the arc-current sensor 22 supply their outputs, respectively, a voltage value V and a current value I, to an acquisition card 23, for example a 24-bit, 32-kHz card. The acquisition card 23 supplies said current value I and said voltage value V, after having acquired them, to an interfacing card 24 (for example a digital card of a CAN-bus type) to the production line on which the welding processes are being carried out, said production line being represented in Figure 1 by a processor 25, which evaluates said current value I and voltage value V and then possibly manages the production line on the basis of information on the quality of the arc-welding process that is obtained from said current value I and voltage value V.

With reference to Figures 2a-2e, in order to illustrate the steps and the time instants that are important for the system and the method according to the invention, the method of short-arc welding will now be briefly illustrated. The working principle of the process of analysis of the quality of the welds derives in fact from analysis of the short-arc arc-welding process.

Figure 2a is consequently a very schematic representation of the nozzle 13 of the welding torch 12 from which the protection gas 15 and the welding wire 18 exit. In the step illustrated in Figure 2a, the wire 18 is represented as it is advancing towards the piece 11 under the action of the unwinding apparatus 17. In the step illustrated in Figure 2b, the wire 18 is in contact with the piece 11 and sets up a short circuit therewith, i.e., with the weld puddle. Figure 2c represents the step of detachment of a drop 18a from the wire 18, Figure 2d then represents the welding wire 18 during subsequent advance towards the piece 11, Figure 2e represents the welding wire 18 in a subsequent state of short-circuit with the piece 11. Between the steps represented in Figures 2b and 2d, the process is in an arc condition, and an arc time or hot time $T_{on}$ is hence indicated, i.e., the time taken from the moment when the drop 18a of the welding wire 18 starts to detach from the wire 18 to the moment when it melts in the weld puddle on the piece 11 and a new drop is generated by the short circuit between the wire 18 and the piece 11. Said short circuit pre-announces, in fact, detachment of a new drop 18a from the wire 18. Also indicated in Figure 2 is a total period T of the welding process, calculated between the two short-circuit states, and a cold time $T_{off}$ complementary to the hot time $T_{on}$, in the time interval between the short circuit (Figure 2a) and the detachment of the drop. It is hence clear how an analysis of the succession of hot times or arc times $T_{on}$ will enable evaluation of the frequency of detachment of the drops. In the case where the welding process is stable, also the frequency of detachment of the drops is regular and constant, whilst in the case of welding with defectiveness the process of detachment of the drops does not present a regular and constant frequency. The system according to the invention is configured for carrying out a comparison of the times obtained from the signals acquired by the arc-welding process with thresholds extracted from a reference signal.

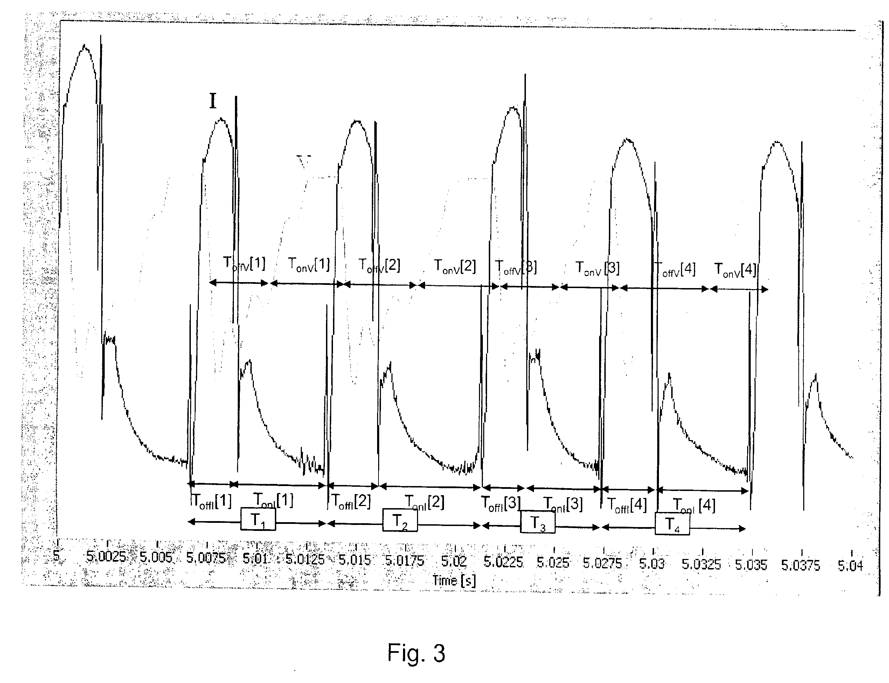

Figure 3 shows the time plot of values of arc current I and arc voltage V acquired during a welding process. In said plot, even though excursions due to transients are present, it is possible to identify, on the basis of what has been said as regards the process described in Figure 2, a substantially pulsed or square-wave evolution, with the total period T, the hot time $T_{on}$ and the complementary cold time $T_{off}$. As may be appreciated from Figure 3, said times, which are of the order of tens of milliseconds, are not always constant, but are variable from drop to drop.

Consequently, the monitoring system according to the invention is configured for carrying out an operation of generation of a reference signal, which envisages making, via the arc-welding process, one or more welding beads, and at the same time acquiring via the voltage sensor 21 and current sensor 22 the corresponding arc voltage V and arc current I.

For each weld bead acquired, measured by the computer 25 are the hot times $T_{on}$ corresponding to the time of detachment of the drop 18a, as illustrated with reference to Figures 2a-2e. A weld bead usually envisages detachment of a number of drops from the wire 18 and hence in general there will be a vector of hot times $T_{on}$ for each weld bead. Indicated in Figure 3 are in particular the hot times corresponding to four successive drops $T_{onV}[1]$, $T_{onV}[2]$, $T_{onV}[3]$, $T_{onV}[4]$ that contribute to composing said hot-time vector. In general a hot-time vector is obtained, with a much greater number of values, $T_{onV}[j]$, where j is the index of the vector and the subscript V indicates that the times are evaluated starting from the voltage values V. A respective hot-time vector $T_{onI}[j]$ is also obtained on the basis of the current values I. Shown in Figure 3 are both the times deriving from the current values I and the times deriving from the voltage values V. The monitoring system according to the invention processes, in the computer 25, said hot-time vectors $T_{onV}[j]$ or $T_{onI}[j]$, or else a number of hot-time vectors associated to a number of weld beads produced by way of reference, for calculating a normal cumulative distribution function (CDF) thereof. Said normal cumulative distribution function supplies a mean value $\mu$ of the hot times $T_{onV}[j]$ or $T_{onI}[j]$ measured, as well as a standard deviation $\sigma$ of the hot times $T_{onV}[j]$ or $T_{onI}[j]$ measured.

In the ensuing treatment, reference will be made for reasons of simplicity to the hot-time vector $T_{on}[j]$ alone, without specifying whether it derives from the voltage values or from the current values.

The system according to the invention is then configured for continuing processing in the computer 25 and identifying acceptability-threshold values *Ts* for the hot time $T_{on}$, i.e., values beyond which the times and frequencies that derive therefrom are to be considered excessively irregular to be able to guarantee a good-quality weld, on the basis of the distribution function of the normal cumulative distribution, i.e., the probability P(x) of the distribution:

$$P(x) = \frac{1}{2}\left(1 + erf\left(\frac{x - \mu}{\sigma\sqrt{2}}\right)\right) \qquad (1)$$

The system comprises calculation of the value of the variable x of the distribution whereby said probability P(x) assumes a pre-determined value, which can possibly be set by the operator or by a further control module. The value of the variable x found corresponds to the acceptability threshold *Ts* for the arc times; i.e., the variable x identifies arc-time values of the distribution whereby the probability P(x) of the distribution assumes a pre-determined value. Said pre-determined value of probability P(x) is proportional to a value of sensitivity Sens. Setting, for example, the value of sensitivity Sens equal to 90, the system obtains automatically the lower acceptability threshold $Ts_{inf}$ and upper acceptability threshold $Ts_{sup}$, according to the relations given below, which determine the lower probability $P_{inf}(x)$ and the higher probability $P_{sup}(x)$:

$$P_{inf}(x) = 1 - \frac{Sens}{100} \quad \Rightarrow \quad Ts_{inf}$$
$$P_{sup}(x) = \frac{Sens}{100} \quad \Rightarrow \quad Ts_{sup} \qquad (2)$$

From the above equations, it is clear that if, for example, the value of sensitivity Sens is set at 90, this corresponds to seeking a probability of 90%. It is possible to reduce or increase said sensitivity Sens to render the system more or less sensitive to the variations of the value of the hot times $T_{on}$ obtained from the values of voltage V and current I.

As has been mentioned, the above treatment does not take into account whether voltage or current values are being processed, but, in greater detail, the system obtains, once the desired sensitivity Sens has been set, a lower acceptability threshold $Ts_{infV}$ and an upper acceptability threshold $Ts_{supV}$ from the hot-time vector $T_{onV}[j]$ obtained from voltage values, and another lower acceptability threshold $Ts_{inf1}$ and upper acceptability threshold $Ts_{sup1}$ from the hot-time vector $T_{onI}[j]$ obtained from current values.

Consequently, the system according to the invention obtains the lower acceptability threshold $Ts_{inf}$ and upper acceptability threshold $Ts_{sup}$, more specifically, as has just been mentioned, two pairs of thresholds for the voltage and for the current, from the data coming from the execution of one or more weld beads, made, for example, at the start of the production cycle. Next, the system according to the invention is configured for monitoring the arc-welding process by processing, on the computer 25 at the end of formation of a weld bead, the respective values of arc voltage V and arc current I acquired, measuring the regularity of the hot times $T_{on}$ obtained from said values, i.e., the regularity of the time taken by the drop of metal 18a originating from the wire 18 to detach, melt, and drop into the weld puddle, up to the next restoration of the short-circuit state, i.e., cessation of the arc step. Figure 2 (already described) provides the example of how a measurement of the hot time $T_{on}$ occurs to obtain a hot-time vector $T_{on}[j]$ corresponding to a stretch of the weld bead. Once said hot-time vector $T_{on}[j]$ corresponding to a weld bead is available, it is then envisaged to obtain an estimate of the hot times, applying a median filter of rank that varies according to the sensitivity of the defects that are to be taken into account, to obtain a filtered hot-time or arc-time vector Tm[i].

The filter can also assume the closed form:

$$Tm[i] = median\ filter\ (J_i) \hspace{4cm} (3)$$

where $J_i$ is a subset of the input vector, i.e., the hot-time vector $T_{on}[j]$:

$$J_i = \{Ton_{i-N},\ Ton_{i-N+1}...,\ Ton_{i-1},\ Ton_i,\ Ton_{i+1}...,\ Ton_{i+N-1},\ Ton_{i+N}\},$$

N is the rank of the filter, which is inversely proportional to the sensitivity of the filter: the smaller the value of the rank N, the more the system is rendered sensitive to the minor impurities present in the weld bead. Conversely, the higher the value, the more the fast variations of the measurements of the hot times Ton are filtered, and hence the system is rendered less sensitive.

The index j is the index of the vector of hot-time values $T_{on}[j]$ acquired for a weld bead. The index i is the index of the filtered hot-time or arc-time vector $Tm[i]$.

The system according to the invention is configured for identifying, via processing in the computer 25, a weld defect by carrying out a comparison between the filtered arc-time vector and the acceptability thresholds. Where said operation of comparison indicates that said filtered arc-time values are not comprised between said acceptability threshold, a weld defect is in general signalled.

More specifically, according to the invention, there is envisaged calculation of a filtered hot-time vector $Tm_V[i]$ on the basis of the hot-time vector $T_{onV}[j]$ from voltage values and a respective filtered hot-time vector $Tm_I[i]$ on the basis of the hot-time vector $T_{onI}[j]$ from current values, which are compared with the respective lower acceptability threshold and upper acceptability threshold, $Ts_{infV}$ and $Ts_{supV}$ for the vector $Tm_V[i]$, $Ts_{inf1}$ and $Ts_{sup1}$ for the vector $Tm_I[i]$.

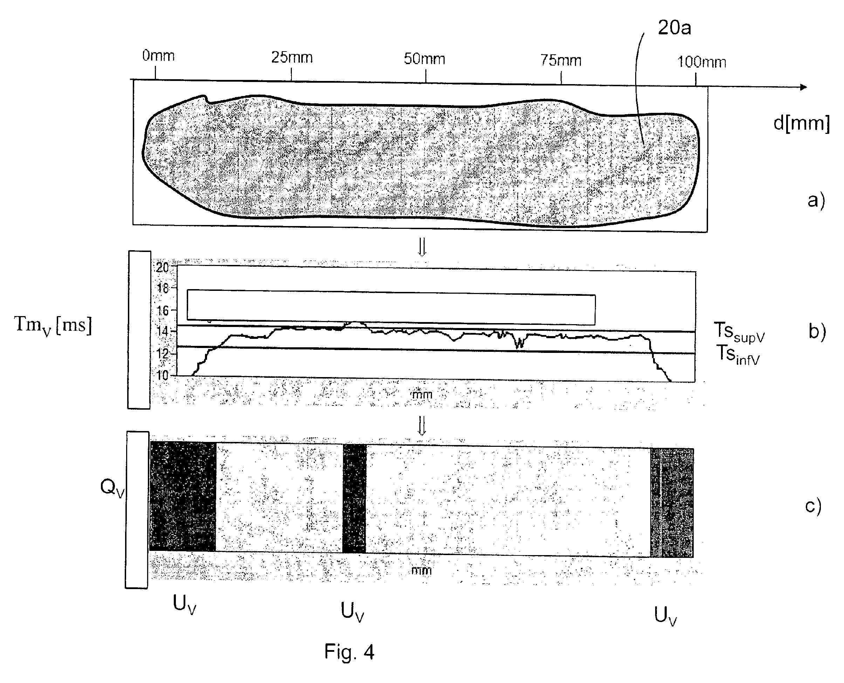

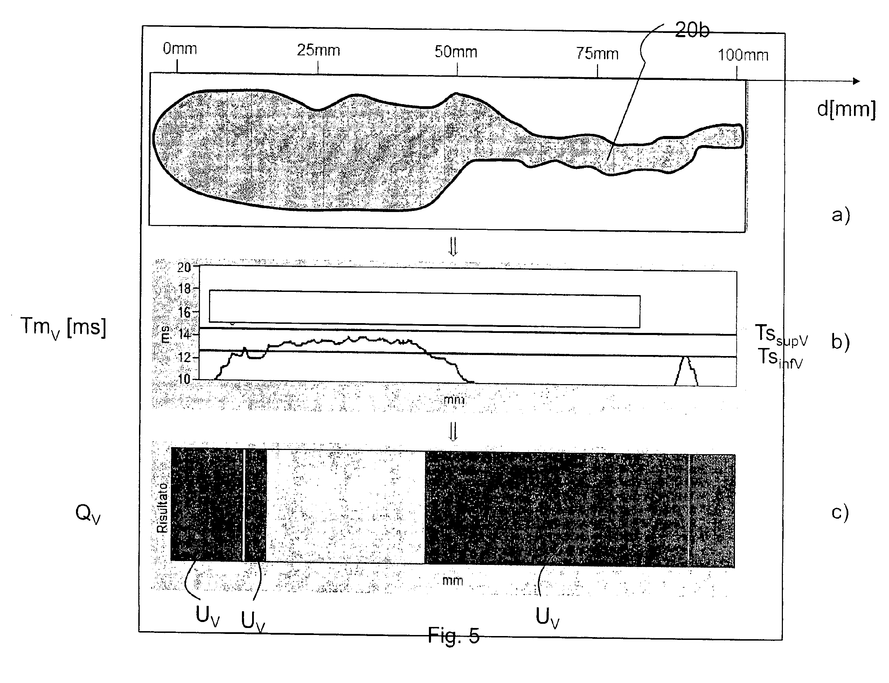

Figures 4a-4c give an example of a good-quality weld bead 20a, in which said filtered hot-time vector $Tm[i]$, specifically the filtered hot-time vector $Tm_V[i]$ obtained from the voltage values V, falls within the threshold set. Shown in Figure 4a is a schematic representation of the weld bead 20a, which develops substantially along an axis that represents the length d of the weld bead. The bead 20a has, by way of example, an overall length of 100 mm. Given in Figure 4b is the filtered hot-time vector $Tm_V[i]$ according to the length d, and given in Figure 4c is a quality signal $Q_V$. Instead, Figures 5a-5c likewise give an example of poor-quality weld bead 20b. It may be noted how, after the first half of the bead 20b there is a complete absence of welding, which emerges from the irregularity in detachment of the weld drops and can be deduced from the fact that values of the filtered hot-time vector $Tm_V[i]$ lie outside the range identified by the lower acceptability threshold $Ts_{infV}$ and the upper acceptability threshold $Ts_{supV}$. Similar results are obtained by considering the current values I. In each of the two cases illustrated one in Figure 4c and one in Figure 5c the respective quality signal $Q_V$ is shown, which is substantially a signal that assumes two levels on the basis of the result of the operation of comparison with the lower acceptability threshold $Ts_{infV}$ and upper acceptability threshold $Ts_{supV}$, as a function of the length d of the weld bead. In said Figures 4c and 5c, said levels are identified and appear as bands corresponding to regions or intervals of the weld along the axis of the length d, representing with darker bands (which may also be coloured bands, for example red ones) the regions where the hot time $T_{onV}$ falls below the lower threshold $Ts_{infV}$ or above the upper acceptability threshold $Ts_{supV}$ and hence here a process instability is identified, designated by $U_V$ (or $U_I$ if current values I have been considered, and hence a corresponding quality signal $Q_I$). Lighter bands (which may also be coloured bands, for example green ones) identify the regions where, instead, the process is considered stable, in so far as the values of the hot time $T_{onV}$ are comprised between the lower acceptability threshold $Ts_{infV}$ and the upper acceptability threshold $Ts_{supV}$.

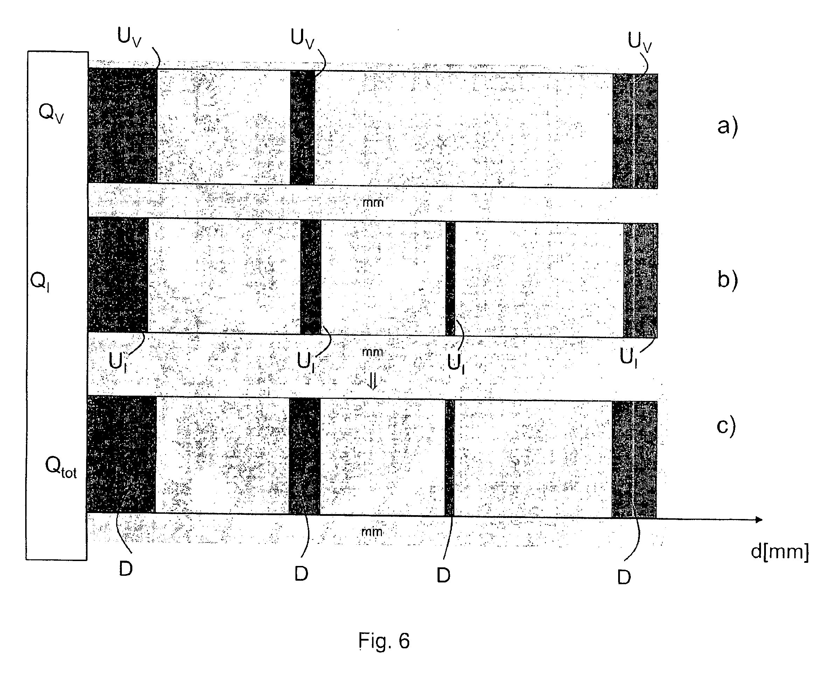

Once evaluation the filtered hot-time vector $Tm_V[i]$ from voltage values V and of the filtered hot-time vector $Tm_I[i]$ from current values I has been completed, two corresponding quality signals $Q_V$ and $Q_I$, respectively, obtained are combined with one another to determine a total quality signal $Q_{tot}$ that adds together and superimposes the respective areas of process instability $U_V$ and $U_I$ in the different regions of the weld to identify the presence of a weld defect D in a region of the weld as a function of the length d. Figures 6a-6c are examples of said type of evaluation, Figure 6a indicating the intervals of process instability $U_V$ identified via the voltage values V, Figure 6b indicating the intervals of process instability $U_I$ identified via the current values, and Figure 6c indicating the intervals of weld defect D deriving from the combination of the intervals of process instability of voltage $U_V$ and current $U_I$. The diagram of Figures 6a-6c, in particular the diagram of Figure 6c can constitute a graphic output displayed on the computer 25 for the operator. Identification of the presence of a number of defects generates a non-coherent global evaluation of the weld.

According to a preferred version of the system according to the invention, it is envisaged in processing of the voltage values V and current values I to neglect the values corresponding to the stretch of ignition and extinction of the arc (for example, the first 15 mm and last 15 mm of the bead). In the resulting central part of the weld bead the monitoring system is preferably configured for applying, for example through processing on the computer 25, the following criteria of signalling of the defects:

- if consecutive defects are identified in an interval that covers a given length of the weld bead, for example, at least 5 mm, the system warns, via a purposely provided signalling device, such as a lamp or siren or other signalling means that can be controlled by the computer 25, that the weld has a fault;
- if defects, which can also be non consecutive, are identified in intervals having a total length greater in percentage terms than a given percentage of the length of the weld bead, for example 30%, defectiveness (even non-consecutive), it signals the presence of a fault;
- in the other cases, the monitoring system judges the weld as being of "acceptable" quality: it does not present either consecutive defects beyond 5 mm, or too many isolated defects (beyond 30% of the length of the bead).

Thanks to the characteristics that have been indicated above, the system according to the invention provides a monitoring which supplies a reference linked to the conditions of the welding process, given that the acceptability thresholds derive from a statistical evaluation of parameters acquired. Advantageously, the system according to the invention combines the possibility of setting in a simple way the sensitivity of the acceptability thresholds for the arc times, via the simple setting of the desired probability for the variable arc time, with the possibility of adjusting in a simple way the sensitivity to the rapidity of the oscillations of the arc time in the specific process. The result is a particularly simple system that is readily understandable for the operator as regards setting thereof in so far as the system tends to produce semiautomatically thresholds with time values well correlated to the type of welding process in progress in a given production cycle, substantially determining a working point in terms of arc-time values of the monitoring system.

The adoption of a method that envisages calculating a distribution of the arc times and obtaining therefrom the thresholds by setting values that the distribution probability must assume moreover involves specific advantages as compared to the use of other techniques that use, for example, the mean value of the data vector, the standard deviation, or the sum of the mean value and of the deviation. The use of the distribution advantageously produces in fact thresholds that are more stable in regard to process instabilities, which determine a range of acceptability of the arc time that is narrower (approximately 1 ms in the case of the example).

In this context, the control of the sensitivity to the defects of the filtering envisages a fine adjustment around said working point prior to comparison with the acceptability threshold, which enables management of the rapidity of the variations of the arc times from one drop to the other during the welding process. Said control of the sensitivity to defects advantageously co-operates with the settings of sensitivity of the step of calculation of the reference acceptability threshold for establishing in a simple and manageable way the overall sensitivity of the monitoring system in regard to defects.

## Claims

1. A system for monitoring arc-welding processes, comprising arc-voltage sensor means (21) and arc-current sensor means (22), means (23) for acquisition of voltage values (V) measured by said arc-voltage sensor means (21) and of current values (I) measured by said arc-current sensor means (22), and processing means (25) configured for processing said voltage values (V) and said current values (I) for calculating one or more vectors of time values ($T_{on}[j]$; $T_{onV}[j]$, $T_{onI}[j]$) corresponding to a state of arc of the arc-welding process, said system being **characterized in that**:

said processing means (25) are configured for executing the operations of:
calculating reference values ($Ts_{supV}$, $Ts_{infV}$, $Ts_{supI}$, $Ts_{infI}$) of arc time ($T_{on}[j]$; $T_{onV}[j]$, $T_{onI}[j]$) via the steps of:

calculating a statistical distribution of respective arc-time vectors ($T_{on}[j]$; $T_{onV}[j]$, $T_{onI}[j]$) obtained from voltage values (V) and from current values (I), measured during execution of one or more reference welds; and
calculating as reference values respective acceptability thresholds ($Ts_{supV}$, $Ts_{infV}$, $Ts_{supI}$, $Ts_{infI}$) corresponding to arc-time values (x) of the distribution whereby a probability ($P(x)$) of the distribution assumes a predetermined value ($P_{inf}$, $P_{sup}$);

performing monitoring of successive welds via the steps of:

obtaining respective arc-time vectors ($T_{on}[j]$; $T_{onV}[j]$, $T_{onI}[j]$) from voltage values (V) measured by said arc-voltage sensor means (21), and from current values (I) measured by said arc-current sensor means (22), corresponding to one or more of said successive welds; and
performing a filtering on said arc-time vectors ($T_{on}[j]$; $T_{onV}[j]$, $T_{onI}[j]$) to obtain corresponding filtered arc-time vectors (Tm[i]);

comparing said filtered arc-time vectors (Tm[i]) with said respective acceptability thresholds (Ts$_{supV}$, Ts$_{infV}$, Ts$_{supI}$, Ts$_{infI}$); and
identifying instabilities of the welding process (U$_V$, U$_I$, D) when said operation of comparison indicates that said filtered arc-time values (Tm[i]) are not comprised between said acceptability thresholds (Ts$_{sup}$, Ts$_{inf}$).

2. The system according to Claim 1, **characterized in that** said filtering comprises application of a filtering of rank (N) that varies according to the desired sensitivity to defects.

3. The system according to Claim 2, **characterized in that** said filtering comprises application of a median filter of variable rank.

4. The system according to Claim 1 or Claim 2 or Claim 3, **characterized in that** said processing means (25) are configured for executing said operation of comparison and identification of the instability of the welding process (U$_V$, U$_I$, D) as a function of the length (d) of the weld (20a, 20b).

5. The system according to one or more of Claims 1 to 4, **characterized in that** said processing means (25) are configured for identifying intervals of arc-voltage instability (U$_V$) by comparing the filtered arc-time vector (Tm$_V$) obtained from the arc-voltage values (V) with the respective acceptability thresholds (Ts$_{supV}$, Ts$_{infV}$) and identifying intervals of arc-current instability (U$_I$) by comparing a filtered arc-time vector (Tm$_I$) obtained from arc-current values (I) with the respective acceptability thresholds (Ts$_{supV}$, Ts$_{infV}$),
said processing means (25) being moreover configured for identifying a weld defect (D) in regions of the weld obtained by the superposition of intervals of arc-voltage instability (U$_v$) and of intervals of arc-current instability (U$_I$).

6. The system according to Claim 4 or Claim 5, **characterized in that** said processing means (25) are configured for generating, on the basis of said operation of comparison, weld-quality signals (Q$_v$, Q$_I$, Q$_{tot}$) with two levels, which identify, respectively, the instability intervals (U$_v$, U$_I$, D), in which said filtered arc-time values (Tm [i]) are not comprised between said acceptability thresholds (Ts$_{sup}$, Ts$_{inf}$) and stability intervals, where said filtered arc-time values (Tm [i]) are comprised between said acceptability thresholds (Ts$_{sup}$, Ts$_{inf}$).

7. The system according to Claim 6, **characterized in that** said processing means (25) are configured for displaying (25), via a display of bands of different intensity or colour, associated, respectively, to said levels, weld-quality signals (Q$_V$, Q$_I$, Q$_{tot}$).

8. The system according to one or more of Claims 1 to 7, **characterized in that** said distribution is a normal cumulative distribution.

9. The system according to one or more of Claims 1 to 8, **characterized in that** it comprises setting a value of desired sensitivity (Sens) for regulating said predetermined value (P$_{inf}$, P$_{sup}$) assumed by said probability (P(x)) of the distribution for calculation of the acceptability thresholds (Ts$_{supV}$, Ts$_{infV}$, Ts$_{supI}$, Ts$_{infI}$).

10. The system according to one or more of Claims 1 to 9, **characterized in that** said operation of processing arc-voltage values (21) and arc-current values (22) comprises neglecting values corresponding to the stretch of ignition and extinction of the arc.

11. The system according to one or more of Claims 1 to 10, **characterized in that** said processing means (25) are configured for signalling a fault if said operation of identification of welding defects (D) identifies consecutive defects in an interval that covers a given length of the weld bead.

12. The system according to one or more of Claims 1 to 11, **characterized in that** said processing means (25) are configured for signalling a fault if said operation of identification of welding defects (D) identifies even non-consecutive defects in intervals of total length greater in percentage terms than a given percentage of the length of the weld bead (20a, 20b).

13. The system according to one or more of Claims 1 to 12, **characterized in that** it comprises interfacing means (24), in particular operating according to the CAN-bus protocol, for interfacing said acquisition means (23) with said processing means (25), said processing means (25) being operatively connected for controlling it to a production line on which the welding processes are executed on the basis of said instability of the welding process ($U_V$, $U_I$, D) identified from the current values (I) and voltage values (V).

14. A method for monitoring arc-welding processes, comprising using a system according to one or more of Claims 1 to 13.

**Patentansprüche**

1. System zur Überwachung von Lichtbogenschweißvorgängen, enthaltend eine Bogenspannungs-Sensoreinrichtung (21) und eine Bogenstrom-Sensoreinrichtung (22), eine Einrichtung (23) zum Erfassen von Spannungswerten (V), die von der Bogenspannungs-Sensoreinrichtung (21) gemessen werden, und von Stromwerten (I), die von der Bogenstrom-Sensoreinrichtung (22) gemessen werden, sowie eine Verarbeitungseinrichtung (25), die dazu eingerichtet ist, die Spannungswerte (V) und die Stromwerte (I) zu verarbeiten, um wenigstens einen Vektor von Zeitwerten ($T_{on}[j]$; $T_{onV}[j]$, $T_{onI}[j]$) entsprechend einem Zustand des Lichtbogens des Lichtbogenschweißvorganges zu berechnen,
wobei das System **dadurch gekennzeichnet ist, dass**:

die Verarbeitungseinrichtung (25) dazu eingerichtet ist, folgende Tätigkeiten auszuführen:
Berechnen von Bezugswerten ($Ts_{supV}$, $Ts_{infV}$, $Ts_{supI}$, $Ts_{infI}$) der Lichtbogenzeit ($T_{on}[j]$; $T_{onV}[j]$, $T_{onI}[j]$) über folgende Schritte:
Berechnen einer statistischen Verteilung von entsprechenden Lichtbogenzeitvektoren ($T_{on}[j]$; $T_{onV}[j]$, $T_{onI}[j]$), die man aus Spannungswerten (V) und Stromwerten (I) erhält, die während der Ausführung wenigstens einer Bezugsschweißnaht gemessen werden; und
Berechnen, als Bezugswerte, entsprechender Eignungsschwellenwerte ($Ts_{supV}$, $Ts_{infV}$, $Ts_{supI}$, $Ts_{infI}$) entsprechend den Lichtbogenzeitwerten (x) der Verteilung, wobei eine Wahrscheinlichkeit (P(x)) der Verteilung einen vorbestimmten Wert ($P_{inf}$, $P_{sup}$) annimmt;
Ausführen der Überwachung aufeinander folgender Schweißnähte über folgende Schritte:
Ermitteln entsprechender Lichtbogenzeitvektoren ($T_{on}[j]$; $T_{onV}[j]$, $T_{onI}[j]$) aus Spannungswerten (V), die von der Bogenspannungs-Sensoreinrichtung (21) gemessen werden, und von Stromwerten (I), die von der Bogenstrom-Sensoreinrichtung (22) gemessen werden, entsprechend wenigstens einer der nachfolgenden Schweißnähte; und
Ausführen einer Filterung der Lichtbogenzeitvektoren ($T_{on}[j]$; $T_{onV}[j]$, $T_{onI}[j]$), um entsprechende gefilterte Lichtbogenzeitvektoren (Tm[i]) zu erhalten;
Vergleichen der gefilterten Lichtbogenzeitvektoren (Tm[i]) mit den entsprechenden Eignungsschwellenwerten ($Ts_{supV}$, $Ts_{infV}$, $Ts_{supI}$, $Ts_{infI}$) und
Identifizieren von Instabilitäten des Schweißvorgangs ($U_v$, $U_I$, D), wenn der Vorgang des Vergleichens anzeigt, dass die gefilterten Lichtbogenzeitwerte (Tm[i]) nicht zwischen den Eignungsschwellenwerten ($Ts_{sup}$, $Ts_{inf}$) enthalten sind.

2. System nach Anspruch 1, **dadurch gekennzeichnet, dass** die Filterung die Anwendung einer Filterung nach Rang (N) umfasst, der sich gemäß der gewünschten Empfindlichkeit auf Defekte ändert.

3. System nach Anspruch 2, **dadurch gekennzeichnet, dass** die Filterung die Anwendung eines Medianfilters eines variablen Ranges beinhaltet.

4. System nach Anspruch 1, 2 oder 3, **dadurch gekennzeichnet, dass** die Verarbeitungseinrichtung (25) dazu eingerichtet ist, den Vorgang des Vergleichs und der Identifikation der Instabilität des Schweißvorgangs ($U_v$, $U_I$, D) als eine Funktion der Länge (d) der Schweißnaht (20a, 20b) auszuführen.

5. System nach wenigstens einem der Ansprüche 1 bis 4, **dadurch gekennzeichnet, dass** die Verarbeitungseinrichtung (25) dazu eingerichtet ist, Intervalle einer Bogenspannungs-Instabilität ($U_v$) zu identifizieren, indem sie den gefilterten Lichtbogenzeitvektor ($Tm_V$), den man aus den Bogenspannungswerten (V) erhält, mit den entsprechenden Eignungsschwellenwerten ($Ts_{supV}$, $Ts_{infV}$) vergleicht, und Intervalle einer Bogenstrominstabilität ($U_I$) zu identifizieren, indem sie einen gefilterten Lichtbogenzeitvektor ($Tm_I$), den man aus den Bogenstromwerten (I) erhält, mit den entsprechenden Eignungsschwellenwerten ($Ts_{supV}$, $Ts_{inV}$) vergleicht,
wobei die Verarbeitungseinrichtung (25) weiterhin dazu eingerichtet ist, einen Schweißnahtdefekt (D) in Bereichen der Schweißnaht durch Überlagerung von Intervallen der Bogenspannungs-Instabilität ($U_v$) und Intervallen der Bogenstrom-Instabilität ($U_I$) zu identifizieren.

**6.** System nach Anspruch 4 oder 5, **dadurch gekennzeichnet, dass** die Verarbeitungseinrichtung (25) dazu eingerichtet ist, auf der Basis des Vergleichsvorgangs Schweißnahtqualitätssignale ($Q_v$, $Q_I$, $Q_{tot}$) mit zwei Pegeln zu erzeugen, die die Instabilitätsintervalle ($U_v$, $U_I$, D), bei denen die gefilterten Lichtbogenzeitwerte (Tm[i]) zwischen den Eignungsschwellenwerten ($Ts_{sup}$, $Ts_{inf}$) nicht enthalten sind, bzw. Stabilitätsintervalle identifizieren, bei denen die gefilterten Lichtbogenzeitwerte (Tm[i]) zwischen den Eignungsschwellenwerten ($Ts_{sup}$, $Ts_{inf}$) enthalten sind.

**7.** System nach Anspruch 6, **dadurch gekennzeichnet, dass** die Verarbeitungseinrichtung (25) dazu eingerichtet ist, über eine Anzeige von Bändern unterschiedlicher Farbintensität, die jeweils den Pegeln zugeordnet sind, Schweißnahtqualitätssignale ($Q_V$, $Q_I$, $Q_{tot}$) anzuzeigen (25).

**8.** System nach wenigstens einem der Ansprüche 1 bis 7, **dadurch gekennzeichnet, dass** die Verteilung eine normale kumulative Verteilung ist.

**9.** System nach wenigstens einem der Ansprüche 1 bis 8, **dadurch gekennzeichnet, dass** es die Einstellung eines Wertes einer gewünschten Empfindlichkeit (Sens) zum Regulieren des vorbestimmten Wertes ($P_{inf}$, $P_{sup}$) umfasst, der von der Wahrscheinlichkeit (P(x)) der Verteilung angenommen wird, um die Eignungsschwellenwerte ($Ts_{supV}$, $Ts_{infV}$, $Ts_{supI}$, $Ts_{infI}$) zu berechnen.

**10.** System nach wenigstens einem der Ansprüche 1 bis 9, **dadurch gekennzeichnet, dass** der Vorgang der Verarbeitung von Bogenspannungswerten (21) und Bogenstromwerten (22) das Vernachlässigen von Werten beinhaltet, die der Spanne von Zündung und Erlöschen des Lichtbogens entsprechen.

**11.** System nach wenigstens einem der Ansprüche 1 bis 10, **dadurch gekennzeichnet, dass** die Verarbeitungseinrichtung (25) dazu eingerichtet ist, einen Fehler zu signalisieren, sofern der Vorgang zum Identifizieren von Schweißnahtdefekten (D) aufeinander folgende Defekte in einem Intervall identifiziert, das eine gegebene Länge der Schweißnaht abdeckt.

**12.** System nach wenigstens einem der Ansprüche 1 bis 11, **dadurch gekennzeichnet, dass** die Verarbeitungseinrichtung (25) dazu eingerichtet ist, einen Fehler zu signalisieren, sofern der Vorgang zum Identifizieren von Schweißdefekten (D) selbst nicht aufeinander folgende Defekte in Intervallen einer Gesamtlänge feststellt, die prozentual länger ist als ein gegebener Prozentsatz der Länge der Schweißnaht (20a, 20b).

**13.** System nach wenigstens einem der Ansprüche 1 bis 12, **dadurch gekennzeichnet, dass** es eine Schnittstelleneinrichtung (24) enthält, die insbesondere gemäß dem CAN-Bus-Protokoll arbeitet, um die Erfassungseinrichtung (23) mit der Verarbeitungseinrichtung (25) schnittstellenartig zu verbinden, wobei die Verarbeitungseinrichtung (25) wirkungsmäßig an eine Produktionsstraße, auf der die Schweißvorgänge ausgeführt werden, angeschlossen ist, um diese auf der Basis der Instabilität des Schweißvorganges ($U_V$, $U_i$, D) zu steuern, der aus den Stromwerten (I) und den Spannungswerten (V) identifiziert wird.

**14.** Verfahren zum Überwachen eines Lichtbogenschweißvorgangs, umfassend die Verwendung eines Systems nach wenigstens einem der Ansprüche 1 bis 13.

**Revendications**

**1.** Système de contrôle de procédé de soudage à l'arc, comprenant des moyens de capteur de tension d'arc (21) et des moyens de capteur de courant d'arc (22), des moyens (23) d'acquisition de valeurs de tension (V) mesurées par lesdits moyens de capteur de tension d'arc (21) et de valeurs de courant (I) mesurées par lesdits moyens de capteur de courant d'arc (22), et des moyens de traitement (25) configurés pour traiter lesdites valeurs de tension (V) et lesdites valeurs de courant (I) en vue de calculer un ou plusieurs vecteurs de valeurs de temps ($T_{on}$[j]; $T_{onV}$[j], $T_{onI}$[j]) correspondant à un état d'arc du procédé de soudage à l'arc, ledit système étant **caractérisé en ce que**:

lesdits moyens de traitement (25) sont configurés pour exécuter les opérations consistant à :
calculer de valeurs de référence ($Ts_{supV}$, $Ts_{infV}$, $Ts_{supI}$, $Ts_{infI}$) de temps d'arc ($T_{on}$[j]; $T_{onV}$[j], $T_{onI}$[j]) via les étapes consistant à :
calculer une distribution statistique de vecteurs de temps d'arc respectifs ($T_{on}$[j]; $T_{onV}$[j], $T_{onI}$[j]) obtenus à partir de valeurs de tension (V) et de valeurs de courant (I), mesurées pendant l'exécution d'une ou plusieurs soudures

**EP 2 253 407 B1**

de référence ; et

calculer comme valeurs de référence des seuils d'acceptabilité respectifs ($Ts_{supV}$, $Ts_{infV}$, $Ts_{supI}$, $Ts_{infI}$) correspondant à des valeurs de temps d'arc (x) de la distribution, moyennant quoi une probabilité (($P(x)$) de la distribution adopte une valeur prédéterminée ($P_{inf}$, $P_{sup}$) ;

effectuer un contrôle de soudures successives via les étapes consistant à:

obtenir des vecteurs de temps d'arc respectifs ($T_{on}[j]$ ; $T_{onV}(j)$, $T_{onI}[j]$) à partir de valeurs de tension (V) mesurées par lesdits moyens de capteur de tension d'arc (21), et à partir de valeurs de courant (I) mesurées par lesdits moyens de capteur de courant d'arc (22), correspondant à une ou plusieurs desdites soudures successives ; et

effectuer un filtrage sur lesdits vecteurs de temps d'arc ($T_{on}[j]$ ; $T_{onV}(j)$, $T_{onI}[j]$) pour obtenir des vecteurs de temps d'arc filtrés ($Tm[i]$) correspondants ;

comparer lesdits vecteurs de temps d'arc filtrés ($Tm[i]$) avec lesdits seuils d'acceptabilité respectifs ($Ts_{supV}$, $Ts_{infV}$, $Ts_{supI}$, $Ts_{infI}$) ; et

identifier des instabilités du procédé de soudage ($U_v$, $U_I$, D) lorsque ladite opération de comparaison indique que lesdites valeurs de temps d'arc filtrées ($Tm[i]$) ne sont pas comprises entre lesdits seuils d'acceptabilité ($Ts_{sup}$, $Ts_{inf}$).

2. Système selon la revendication 1, **caractérisé en ce que** ledit filtrage comprend l'application d'un filtrage de rang (N) qui varie selon la sensibilité souhaitée aux défauts.

3. Système selon la revendication 2, **caractérisé en ce que** ledit filtrage comprend l'application d'un filtre médian de rang variable.

4. Système selon la revendication 1 ou la revendication 2 ou la revendication 3, **caractérisé en ce que** lesdits moyens de traitement (25) sont configurés pour exécuter ladite opération de comparaison et d'identification de l'instabilité du procédé de soudage ($U_v$, $U_I$, D) en fonction de la longueur (d) de la soudure (20a, 20b).

5. Système selon une ou plusieurs des revendications 1 à 4, **caractérisé en ce que** lesdits moyens de traitement (25) sont configurés pour identifier des intervalles d'instabilité de tension d'arc ($U_v$) en comparant le vecteur de temps d'arc filtré ($Tm_v$) obtenu à partir des valeurs de tension d'arc (V) avec les seuils d'acceptabilité respectifs ($Ts_{supV}$, $Ts_{infV}$) et identifier des intervalles d'instabilité de courant d'arc ($U_I$) en comparant un vecteur de temps d'arc filtré ($Tm_I$) obtenu à partir de valeurs de courant d'arc (I) avec les seuils d'acceptabilité respectifs ($Ts_{supV}$, $Ts_{infV}$), lesdits moyens de traitement (25) étant en outre configurés pour identifier un défaut de soudure (D) dans des régions de la soudure obtenues par la superposition d'intervalles d'instabilité de tension d'arc ($U_v$) et d'intervalles d'instabilité de courant d'arc ($U_I$).

6. Système selon la revendication 4 ou la revendication 5, **caractérisé en ce que** lesdits moyens de traitement (25) sont configurés pour générer, en se basant sur ladite opération de comparaison, des signaux de qualité de soudure ($Q_V$, $Q_I$, $Q_{tot}$) avec deux niveaux, qui identifient, respectivement, les intervalles d'instabilité ($U_v$, $U_I$, D), dans lesquels lesdites valeurs de temps d'arc filtrées ($Tm[i]$) ne sont pas comprises entre lesdits seuils d'acceptabilité ($Ts_{sup}$, $Ts_{inf}$) et les intervalles de stabilité, où lesdites valeurs de temps d'arc filtrées ($Tm[i]$) sont comprises entre lesdits seuils d'acceptabilité ($Ts_{sup}$, $Ts_{inf}$).

7. Système selon la revendication 6, **caractérisé en ce que** lesdits moyens de traitement (25) sont configurés pour afficher (25) via un afficheur de bandes d'intensité ou de couleur différente, associées, respectivement, auxdits niveaux, des signaux de qualité de soudure ($Q_V$, $Q_I$, $Q_{tot}$).

8. Système selon une ou plusieurs des revendications 1 à 7, **caractérisé en ce que** ladite distribution est une distribution cumulative normale.

9. Système selon une ou plusieurs des revendications 1 à 8, **caractérisé en ce qu'**il comprend le fait de fixer une valeur de sensibilité souhaitée (Sens) pour réguler ladite valeur prédéterminée ($P_{inf}$, $P_{sup}$) adoptée par ladite probabilité ($P(x)$) de la distribution pour le calcul des seuils d'acceptabilité ($Ts_{supV}$, $Ts_{infV}$, $Ts_{supI}$, $Ts_{infI}$).

10. Système selon une ou plusieurs des revendications 1 à 9, **caractérisé en ce que** ladite opération de traitement des valeurs de tension d'arc (21) et des valeurs de courant d'arc (22) comprend le fait de négliger des valeurs correspondant à un étirement de l'allumage et une extinction de l'arc.

11. Système selon une ou plusieurs des revendications 1 à 10, **caractérisé en ce que** lesdits moyens de traitement (25) sont configurés pour signaliser une défaillance si ladite opération d'identification de défauts de soudage (D) identifie des défauts consécutifs dans un intervalle qui couvre une longueur donnée du cordon de soudure.

12. Système selon une ou plusieurs des revendications 1 à 11, **caractérisé en ce que** lesdits moyens de traitement (25) sont configurés pour signaliser une défaillance si ladite opération d'identification de défauts de soudage (D) identifie des défauts, même non consécutifs, dans des intervalles de longueur totale plus grande en termes de pourcentage qu'un pourcentage donné de la longueur du cordon de soudure (20a, 20b).

13. Système selon une ou plusieurs des revendications 1 à 12, **caractérisé en ce qu'**il comprend des moyens d'interfaçage (24), fonctionnant en particulier selon le protocole du bus CAN (Controller Area Network), pour l'interfaçage desdits moyens d'acquisition (23) avec lesdits moyens de traitement (25), lesdits moyens de traitement (25) étant connectés de manière opérationnelle pour le commander sur une chaîne de production sur laquelle les procédés de soudage sont exécutés en se basant sur ladite instabilité du procédé de soudage ($U_V$, $U_I$, D), identifiée à partir des valeurs de courant (I) et des valeurs de tension (V).

14. Procédé de contrôle de procédés de soudage à l'arc, comprenant l'utilisation d'un système selon une ou plusieurs des revendications 1 à 13.

Fig. 1

Fig. 2

Fig. 3

Fig. 4

EP 2 253 407 B1

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6031203 A

**Non-patent literature cited in the description**

- **T Shinoba ; H. Kaneda ; Y. Takeuchi.** An evaluation of short circuiting are phenomena in GMA welding. *welding and Metal Fabrication,* December 1989, vol. 57 (10